# EUROPÄISCHE PATENTSCHRIFT

(11) **EP 0 736 368 B1**
(45) Veröffentlichungstag und Bekanntmachung des Hinweises auf die Patenterteilung: **21.08.2002**
(21) Anmeldenummer: 96105639.7
(22) Anmeldetag: 09.04.1996
(51) Int. Cl.: B29C 65/06, B29C 65/00, B23K 20/12

(54) **Verfahren zum Einstellen der Arbeitsfrequenz eines Orbitalvibrationsschweissystems**
Method for adjusting the operating frequency of an orbital vibration welding system
Procédé pour le réglage de la fréquence de l'operation d'un système à vibration orbital du soudage

(30) Priorität: 05.04.1995 DE 19512820
(43) Veröffentlichungstag der Anmeldung: 09.10.1996
(73) Patentinhaber: BRANSON ULTRASCHALL Niederlassung der EMERSON TECHNOLOGIES GmbH & CO., D-63128 Dietzenbach (DE)
(72) Erfinder: Lotz, Wilfried, Dr., 63543 Neuberg (DE); Priem, Heiko, 63636 Brachtal-Hellstein (DE); Reitmayer, Gerd, 63743 Aschaffenburg (DE)
(74) Vertreter: Wehnert, Werner, Dipl.-Ing. Patentanwälte Hauck, Graalfs, Wehnert, Döring, Siemons

(56) Entgegenhaltungen:
- EP-A- 0 340 671
- EP-A- 0 481 125
- EP-A- 0 504 494
- US-A- 4 247 346

## Beschreibung

Die Erfindung betrifft ein Verfahren zum Einstellen der Arbeitsfrequenz eines Orbitalvibrationsschweißsystems gemäß dem Oberbegriff des Patentanspruchs 1 sowie eine Vorrichtung zum Durchführen des Verfahrens, gemäß dem Oberbegriff des Anspruch 5. Die Gattung der Erfindung ist aus EP-A-0504 494 bekannt.

Orbitalvibrationsschweißsysteme haben im Gegensatz zu linearen Vibrationsschweißsystemen keine ausgeprägte Schwingungsrichtung. Durch die systembedingte Konstruktion steht den orbitalen Systemen eine Schwingungsebene zur Verfügung. Abhängig von Herstellungstoleranzen und Massenasymmetrien ergeben sich mehrere, im allgemeinen zwei, bevorzugte Schwingungsrichtungen. Diesen verschiedenen Schwingungsrichtungen entsprechen verschiedene Resonanzfrequenzen. Praktisch ergeben sich bei rechteckigen Geometrien damit zwei Resonanzfrequenzen, in welchen der Schwingkopf das Bestreben hat, linear in Richtung der Längs- oder Querachse zu schwingen. Im Bereich zwischen den beiden Resonanzfrequenzen befindet sich ein Übergangsbereich, in welchem der Schwingkopf die Bewegungsrichtung vom linearen Quer- zum linearen Längsschwingen ändert und dabei elliptisch bzw. rund schwingt.

Der Vorteil des orbitalen Schwingsystems liegt in der Möglichkeit des runden oder zumindest elliptischen Schwingens. Aufgrund der harmonischen Bewegung (kein Stillstand des Schwingkopfes am Umkehrpunkt, betragsmäßig weitgehend konstante Schweißgeschwindigkeit) ergeben sich dabei die besten Schweißergebnisse und/oder die kürzesten Schweißzeiten. Durch die harmonische Bewegung ist der Energieübertrag i.a. bei orbitalen Systemen höher und gleichmäßiger als bei linearen Systemen.

In der Praxis ist diese günstige Bewegungsform jedoch nur schwer einzustellen und setzt Kenntnisse und Erfahrung mit dem System voraus. Ohne Beobachtung der Schwingungsform mit entsprechenden Meßmitteln kann der Bediener diese kreisrunde bzw. elliptische Bewegungsform, der eine entsprechende Frequenz, welche i.a. keine Resonanzfrequenz ist, entspricht, nicht ermitteln und einstellen.

Der Erfindung liegt die Aufgabe zugrunde, ein Verfahren anzugeben, mit dem eine optimale Arbeitsfrequenz am Orbitalvibrationsschweißsystem in einfacher Weise einstellbar ist.

Erfindungsgemäß wird die Aufgabe mit einem Verfahren nach Patentanspruch 1 sowie einer Vorrichtung nach Patent anspruch 5 gelöst.

Vorteilhafte Weiterbildungen finden sich in den Unteransprüchen.

Erfindungsgemäß ist ein Verfahren angegeben, mit dem bei jedem Werkzeugwechsel der Orbitalvibrationsschweißmaschine und/oder beim Verschweißen von Werkstücken mit anderer Geometrie, also bei unterschiedlicher Applikation, eine neue optimale Arbeitsfrequenz eingestellt werden soll.

Der Abgleich der Bewegung wird in drei Stufen durchgeführt. Zunächst wird das komplette vorgewählte Frequenzband, beginnend mit der niedrigsten Frequenz, durchfahren, wobei das absolute Stromminimum bzw. Leistungsminimum im Schwingkreis gesucht wird. Dies entspricht der stärksten ausgeprägten Resonanzfrequenz, welcher i.a. jedoch keine kreisförmige Bewegung entspricht.

Danach wird von dieser Resonanzfrequenz ausgehend die Frequenz zu höheren Werten hin verändert und die sich ergebende Bewegungform des Orbitalwelders registriert. Das Optimierungskriterium ist hierbei das Verhältnis der kleinen zur großen Halbachse der Ellipsenbahn. Wird dieses Verhältnis zu eins, so ist die perfekte Kreisform gefunden. Wird das Verhältnis jedoch schlechter als zu Beginn der Messung, so kann zu höheren Frequenzen hin keine bestmögliche Kreisbahn gefunden werden, und die Suche wird nochmals zu niedrigeren Frequenzen hin durchgeführt. Die Suche resultiert dann in der bestmöglichen Kreisbahn innerhalb des vorgegebenen Frequenzbereiches. Hierbei wird die Kreisbahn als die bestmögliche bezeichnet, bei der die Beträge der großen und kleinen Ellipsenhalbachse am dichtesten beieinander liegen. Applikations- und massenabhängig kann dies auch eine langgestreckte Ellipse oder eine Gerade sein. Diese bestmögliche Frequenz wird dann vom System eingestellt.

Im dritten Schritt überprüft das System, ob die gefundene Frequenz zu einer stabilen Bewegung führt oder ob die Bewegung sich ändert (Torkeln der Kreisbahn, Verändern des Radius, etc.). Ist sie nicht stabil, so wird die Frequenz des Stromminimums ausgegeben und als Arbeitsfrequenz gespeichert.

Diese Vorgehensweise setzt voraus, daß die Bewegung im Leerlauf (d.h. ohne Verschweißen von Kunststoffteilen) dieselbe ist wie unter Last (Verschweißung). In vielen Fällen wird diese Bedingung auch erfüllt und der automatische Abgleich ist dann abgeschlossen.

Abhängig von den Parametern (hoher Anpreßdruck während des Verschweißens, starke Veränderung der Materialeigenschaften während des Schweißvorganges, etc.) ist es möglich, daß die gefundene Frequenz unter Last nicht mehr in der bestmöglichen Bewegungsform resultiert. In diesem Falle ist der Suchprozeß unter Last zu wiederholen.

Für Teilegeometrien, welche die Bewegung in einer Achse einschränken, kann die bestmögliche Kreisform jedoch eine ungünstige Bewegung sein. In diesem Falle werden die Suchkriterien geändert, d.h. anstelle nach der bestmöglichen Kreisform zu schauen, wählt man eine Bewegung mit entsprechend anderer Form (z.B. langgestreckte Ellipse oder lineare Schwingbewegung) aus und der Suchprozeß im Leerlauf bzw. unter Last findet unter den entsprechend geänderten Suchkriterien statt.

Somit läßt sich erfindungsgemäß für jede Fügegeometrie eine optimale Arbeitsfrequenz auffinden, die in der Regel eine kreisförmige oder ellipsenförmige Schwingungsgeometrie hervorruft, die aber auch eine langgestreckte Ellipsenform oder sogar eine Gerade darstellen kann.

In einem Blockschaltbild ist eine Ausführungsform einer erfindungsgemäßen Schaltung dargestellt.

Als intelligente Einheit dient ein µ-Controller oder ein Prozessor 1 ähnlicher Leistungsfähigkeit. Dieser bekommt über eine Verstärkereinheit 2 das Signal des Strom- oder Leistungsmessers, mit dem der Spulenstrom des elektromagnetischen Antriebssystem für die Orbitalschweißmaschine (nicht dargestellt) gemessen wird. Eine beispielhafte Ausführungsform für eine derartige Vibrationsschweißmaschine ist aus EP 0 504 494 A2 bekannt. Hieraus ist auch bekannt, die Arbeitsfrequenz auf die Resonanzfrequenz des Systems einzustellen. Hierzu wird der Phasenwinkel zwischen Spannung und Strom des elektromagnetischen Antriebes ermittelt, der für den Resonanzzustand gleich Null beträgt.

Vorzugsweise wird das Stromsignal direkt an den Antriebsspulen des elektromagnetischen Antriebes abgenommen, um auf diese Weise möglichst direkt das Leistungsminimum zu ermitteln.

Die Bewegungsform wird durch einen oder mehrere Sensoren, welche richtungsempfindlich die Bewegung aufnehmen können, detektiert. Dies kann z.B. durch Verwendung zweier Beschleunigungsaufnehmer, welche 90° zueinander in der Bewegungsebene angebracht sind, geschehen. Aus diesen beiden Signalen ermittelt der Prozessor den Bahnverlauf des Schwingsystems. Im Falle einer Kreisbahn sind beide Signale vom Betrag her gleich groß und um 90° phasenverschoben. Im Blockschaltbild sind diese Signale als analoge Eingänge 3 bezeichnet. Diese Signale werden in einem Eingangsfilter weiterverarbeitet und dem Prozessor 1 übergeben.

Der Prozessor gibt die Befehle für das Durchfahren der Frequenz, der dabei zu verwendenden Schwingungsamplitude und/oder nach erfolgten Abgleich für die gefundene Arbeitsfrequenz über einen Ausgang 5 an den Frequenzumrichter (nicht dargestellt), welcher den elektromagnetischen Antrieb des Schwingkopfes antreibt. Dabei wird die Sollfrequenz für den Antrieb als Spannungssignal übergeben.

Über digitale Ein- und Ausgänge 6 bzw. 7 steht der Prozessor in Verbindung mit einer Maschinensteuerung, z.B. einer SPS. Dies ermöglicht die Eingabe der Parameter (Frequenzbereich, Suchverfahren, etc.) über die Maschinen-Bedieneinheiten. Des weiteren werden die gefundenen Parameter an die SPS übergeben, welche damit die Maschine steuert bzw. diese Parameter können ausgelesen und weiterverarbeitet werden. Ebenso werden Bereit- und Fehlermeldungen an die SPS übergeben.

Das separat von der SPS aufgebaute Tuning-System ermöglicht auch, die Maschine ohne Abgleich rein manuell bzw. über die SPS zu steuern und zu regeln. In diesem Falle wird der Kontroller über einen digitalen Eingang passiv geschaltet.

Die verwendeten richtungsempfindlichen Sensoren bzw. einer davon, z.B. ein Beschleunigungsaufnehmer, können auch zur Regelung der Amplitude während des Tuning- und Schweißvorganges benutzt werden. Ein separates Sensorsystem für die Amplitudenregelung wird nicht benötigt.

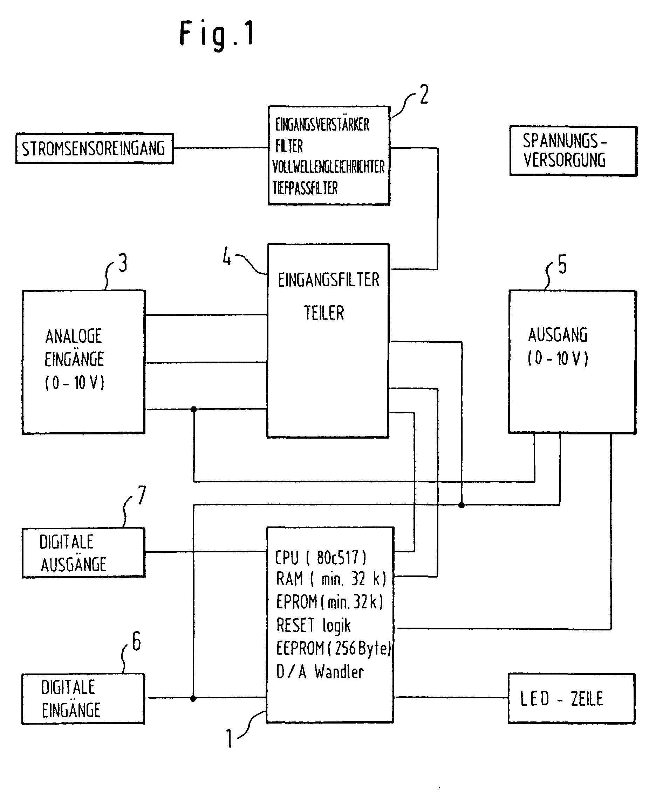

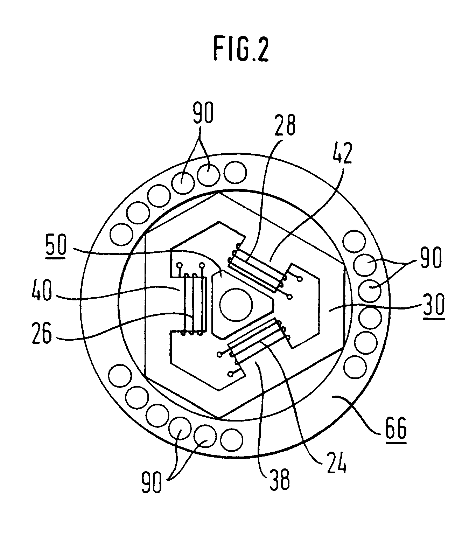

## Patentansprüche

1. Verfahren zum Einstellen der Arbeitsfrequenz eines Orbitalvibrationsschweißsystems, bei dem ein an Federn befestigter Werkstückaufnahmekopf von Elektromagneten angetrieben ist und in einer Schwingungsebene in orbitale Schwingungen zum Verschweißen von Werkstücken, insbesondere aus Kunststoff, versetzt wird und in einem vorgegebenen Frequenzbereich die Frequenz verändert wird, **dadurch gekennzeichnet, daß** dabei die geometrische Form der Schwingung ermittelt wird und die Frequenz, welche die für das jeweilige Werkstück bestmögliche Schwingungsform bewirkt, ausgewählt und als Arbeitsfrequenz eingestellt wird.

2. Verfahren nach Anspruch 1, **dadurch gekennzeichnet, daß** in einem vorgegebenen Frequenzbereich die Arbeitsfrequenz der Elektromagnete verändert wird, bis die zu einem Strom- bzw. Leistungsminimum gehörende Resonanzfrequenz ermittelt ist, daß dann von dieser Resonanzfrequenz ausgehend die Arbeitsfrequenz nach höheren und/oder niedrigeren Werten hin verändert wird, dabei die geometrische Form der Schwingungen gemessen, und die einer optimalen Schwingungsform entsprechende Arbeitsfrequenz eingestellt wird.

3. Verfahren nach Anspruch 1 oder 2, **dadurch gekennzeichnet, daß** mit der ausgewählten und eingestellten Arbeitsfrequenz bestimmt wird, ob sich eine stabile Schwingungsform ergibt und daß bei nicht-stabiler Schwingungsform die Resonanzfrequenz, d.h. die Frequenz, bei der das Stromminimum auftritt, ausgewählt und eingestellt wird.

4. Verfahren nach einem der Ansprüche 1 bis 3, **dadurch gekennzeichnet, daß** je nach Werkstückgeometrie die optimale Schwingungsform eine bestmögliche Kreisform bzw. Ellipsenform oder eine lineare Schwingungsform ist.

5. Orbitalvibrationsschweißsystem, bei dem ein an Federn befestigter Werkstückaufnahmekopf von Elektromagneten angetrieben ist und in einer Schwingungsebene in orbitale Schwingungen zum Verschweißen von Werkstücken versetzt wird, wobei ein Prozessor zum Einstellen der Arbeitsfrequenz vorhanden ist, der in einem vorgegebenen Frequenzbereich die Frequenz verändert, **dadurch gekennzeichnet, daß** Sensoren zur Ermittlung der geometrischen Form der Schwingung vorgesehen sind, und daß dem Prozessor über Eingänge die abgetastete Schwingungsform des Schwingkopfes und der Spulenstrom des elektromagnetischen Antriebs zugeführt wird, und der Prozessor Spannungen für die Frequenz- und Amplitudeneinstellung des elektromagnetischen Antriebs liefert.

6. Vorrichtung nach Anspruch 5, **dadurch gekennzeichnet, daß** der Prozessor an Ein- und Ausgänge einer Maschinensteuerung angeschlossen ist.

## Claims

1. A method for adjusting the operating frequency of an orbital vibration welding system, wherein a workpiece receiving head mounted to springs is driven by solenoids and is subjected to orbital vibrations in a vibration plane for welding workpieces, in particular of plastic material, and the frequency is varied within a predetermined frequency range, **characterized in that** the geometrical configuration of the vibration is sensed and the frequency resulting in an optimal shape of the vibration of the respective workpiece is selected and applied as operating frequency.

2. A method according to claim 1 **characterized in that** the operating frequency of the solenoids is varied within a predetermined frequency range until the resonant frequency associated with a current minimum or power minimum is detected, that the operating frequency is varied towards higher and/or lower values starting from said resonant frequency, while measuring the geometrical configuration of the vibration and the operating frequency corresponding to an optimal vibration configuration will be applied.

3. A method according to claim 1 or claim 2, **characterized in that** the selected and applied operating frequency is used to determine whether a stable vibration configuration will result and that, when the vibration configuration is not stable, the resonance frequency, i.e. the frequency resulting in minimal current, will be selected and applied.

4. A method according to any of claims 1 to 3 **characterized in that** the optimal vibration configuration is an optimal circular or elliptic configuration or a linear vibratory configuration depending on the geometry of the workpiece.

5. An orbital vibration welding system wherein a workpiece receiving head mounted to springs is driven by solenoids and is subjected to orbital vibrations in a vibration plane for welding of workpieces, including a processor for adjusting the operating frequency, which processor varies the frequency within a predetermined frequency range, **characterized in that** there are provided sensors for sensing the geometrical configuration of the vibration, and that the processor receives, via inputs, the sensed vibration configuration of the workpiece receiving head and the coil current of the solenoid drive, and that the processor provides voltages for the frequency and amplitude adjustment of the solenoid drive.

6. An apparatus according to claim 5 wherein the processor is connected to inputs and outputs of a machine control.

## Revendications

1. Procédé de réglage de la fréquence de travail d'un dispositif de soudage par vibrations de type orbital, selon lequel une tête de fixation de pièces fixée à des ressorts est entraînée par des électro-aimants et est déplacée dans un plan de vibration suivant des vibrations de type orbital, en vue du soudage de pièces, notamment en matière plastique, et la fréquence est modifiée dans un domaine de fréquences préfixé, **caractérisé en ce que** la forme géométrique de la vibration est relevée et la fréquence qui assure la forme de vibration la meilleure possible pour la pièce chaque fois considérée est sélectionnée et sert de base au réglage en tant que fréquence de travail.

2. Procédé suivant la revendication 1, **caractérisé en ce que** la fréquence de travail des électro-aimants est modifiée dans un domaine de fréquences préfixé jusqu'à ce que la fréquence de résonance appartenant à un minimum de courant ou de puissance soit relevée, **en ce qu'**en partant alors de cette fréquence de résonance, la fréquence de travail est modifiée vers des valeurs plus élevées et/ou plus faibles, la forme géométrique des vibrations est alors mesurée et la fréquence de travail correspondant à une forme de vibration optimale est réglée.

3. Procédé suivant la revendication 1 ou 2, **caractérisé en ce qu'**avec la fréquence de travail sélectionnée et réglée, il est déterminé si une forme de vibration stable a ou non lieu et **en ce qu'**en cas de forme de vibration qui n'est pas stable, la fréquence de résonance, c'est-à-dire la fréquence à laquelle le minimum de courant se présente, est sélectionnée et sert de base au réglage.

4. Procédé suivant l'une des revendications 1 à 3, **caractérisé en ce qu'**en fonction de la géométrie de pièce, la forme de vibration optimale est une forme circulaire ou une forme d'ellipse la meilleure possible ou une forme de vibration linéaire.

5. Dispositif de soudage par vibrations de type orbital, dans lequel une tête de fixation de pièces fixée à des ressorts est entraînée par des électro-aimants et est déplacée dans un plan de vibration suivant des vibrations de type orbital, en vue du soudage de pièces, tandis qu'il est prévu un processeur, servant à régler la fréquence de travail, qui modifie la fréquence dans un domaine de fréquences préfixé, **caractérisé en ce qu'**il est prévu des capteurs servant à déterminer la forme géométrique de la vibration et **en ce que** la forme de vibration de la tête vibrante qui est détectée et le courant de bobine de l'entraînement électromagnétique sont envoyés au processeur sur des entrées et le processeur délivre des tensions pour le réglage de fréquence et d'amplitude de l'entraînement électromagnétique.

6. Dispositif suivant la revendication 5, **caractérisé en ce que** le processeur est raccordé à des entrées et des sorties d'une commande de machine.
